# EUROPÄISCHE PATENTSCHRIFT

(11) **EP 0 569 836 B1**
(45) Veröffentlichungstag und Bekanntmachung des Hinweises auf die Patenterteilung: **26.08.1998**
(21) Anmeldenummer: 93107268.0
(22) Anmeldetag: 05.05.1993
(51) Int. Cl.: A01D 75/30, A01D 67/00

(54) **Fahrzeug mit mindestens einem schwenkbar angeschlossenen Arbeitswerkzeug**
Trailing device with at least one pivotally mounted working unit
Dispositif tracteur équipé d'au moins un outil monté pivotant

(30) Priorität: 13.05.1992 US 882340
(43) Veröffentlichungstag der Anmeldung: 18.11.1993
(73) Patentinhaber: DEERE & COMPANY, Moline, Illinois 61265 (US)
(72) Erfinder: Smith, Larry Neil, Beaver Dam, Wisconsin 53916 (US)
(74) Vertreter: Feldmann, Bernhard

(56) Entgegenhaltungen:
- GB-A- 1 601 738
- GB-A- 2 151 446
- US-A- 4 370 846
- US-A- 4 864 805
- US-A- 5 042 236
- US-A- 5 146 733

## Beschreibung

Die Erfindung bezieht sich auf ein Fahrzeug mit mindestens einem über einen Tragarm an das Fahrzeug schwenkbar angeschlossenen Arbeitswerkzeug, das in einer Arbeitsstellung auf der Bodenoberfläche geführt ist, in der Arbeitsstellung mit Bezug auf das Fahrzeug vertikale Relativbewegungen ausführen kann und mit einem hydraulisch beaufschlagbaren Zylinder mittel- oder unmittelbar verbunden ist, der derart in einer ersten Richtung druckbeaufschlagbar ist, daß das Arbeitswerkzeug aus seiner Arbeitsstellung in eine Transportstellung aushebbar ist.

Ein derartiges Fahrzeug (US-A-5 042 236) ist mit zwei vorderen gegebenenfalls antreibbaren Laufrädern ausgestattet, vor denen über die Tragarme in einer Reihe drei Spindelmäheinheiten vertikal schwenkbar angeordnet sind. Jeder Spindelmäheinheit ist ein hydraulisch beaufschlagbarer Zylinder zugeordnet, die alle drei an einen Rahmen des Fahrzeuges angelenkt und über eine Langlochverbindung an die Tragarme angeschlossen sind. Auf diese Weise können die Spindelmäheinheiten aus einer Arbeitsstellung, in der sie infolge der Langlochverbindung beim Auftreffen auf Bodenunebenheiten vertikale Relativbewegungen ausführen können, in eine Transportstellung verstellt werden. Solche Rasenmäher werden bevorzugt auf Golfplätzen eingesetzt, bei denen es auf einem präzisen Rasenschnitt ankommt. Insbesondere bei höheren Arbeitsgeschwindigkeiten schwingen die Spindelmäheinheiten auf und ab, wobei es zu einem unvollkommenen Rasenschnitt kommt. Es werden deshalb Federmittel eingesetzt, die die Spindelmäheinheiten im Einsatz nach unten auf die Bodenoberfläche drücken sollen, aber das vorstehend angesprochene Problem nicht zufriedenstellend lösen können. So werden bei einem eventuellen Auf- und Abschwingen der Spindelmäheinheiten die Federn gestreckt und zusammengepreßt, was zu unterschiedlichen Bodendrücken führt. Man könnte die Federn natürlich auch nachstellen, was aber wegen der begrenzten Federwege nicht in einem ausreichenden Maße und sicherlich nicht während der Fahrt möglich ist. Im übrigen sind Federn störanfällig, neigen zu Ermüdungen und benötigen zusätzliche Befestigungs-und Einstellmittel, wodurch neben dem Platzaufwand die Herstellungs- und Betriebskosten erhöht werden.

Die mit der Erfindung zu lösende Aufgabe wird darin gesehen, die Anschlußvorrichtung für das oder die am Fahrzeug höhenverstellbar angeschlossenen und im Einsatz auf dem Boden geführten Arbeitswerkzeuge vorteilhafter auszubilden. Diese Aufgabe ist dadurch gelöst, daß in der Arbeitsstellung des Arbeitswerkzeuges der Zylinder in einer zweiten der ersten Richtung entgegengesetzten Richtung druckbeaufschlagbar und derart angeordnet ist, daß dieser Druck auf das Arbeitswerkzeug übertragbar ist. Auf diese Weise wird der Bodendruck durch den Zylinder hervorgerufen. Auf die Federn kann damit vollständig verzichtet werden, und der oder die sowieso vorhandenen Zylinder können neben ihrer Aushebefunktion noch die Aufgabe des Anpressens des oder der Arbeitswerkzeuge an die Bodenoberfläche übernehmen.

Nach einem weiteren Vorschlag der Erfindung ist der Zylinder derart ausgebildet, daß er auch beim Verstellen des Arbeitswerkzeuges aus seiner Transportstellung in seine Arbeitsstellung in der zweiten Richtung druckbeaufschlagbar ist. Damit kann der Absenkvorgang aus der Transportstellung gesteuert erfolgen und ist nicht ausschließlich von dem Eigengewicht des Arbeitswerkzeuges abhängig.

Wird beim Absenkvorgang der Kolben des hydraulisch beaufschlagbaren Zylinders bei Beaufschlagung in der ersten Richtung in den Zylinder eingefahren, so kann nach der Erfindung vorgesehen sein, daß in der Arbeitsstellung des Arbeitswerkzeuges das kolbenseitige Ende des Zylinders zusätzlich druckbeaufschlagbar ist.

Damit auch während der Fahrt der Bodendruck in Abhängigkeit von der Fahrgeschwindigkeit und der Bodenbeschaffenheit veränderbar ist, sieht die Erfindung ferner vor, daß der auf den Kolben bei einer Druckbeaufschlagung in der zweiten Richtung einwirkende Druck einstellbar ist. Dies kann in einfacher Weise von Hand erfolgen.

Derartige Fahrzeuge sind mit wenigstens einer Pumpe und einem Sammelbehälter ausgerüstet, weshalb es sich nach der Erfindung anbieten kann, daß für den Druck in der zweiten Richtung ein Ende des Zylinders an die Pumpe über eine Leitung angeschlossen ist, von der eine mit dem Sammelbehälter verbundene Abzweigleitung abzweigt, in der vor dem Sammelbehälter ein einstellbares Begrenzungsventil vorgesehen ist. Die Pumpe kann dabei mit der Pumpe, die ein Anheben des Arbeitswerkzeuges bewirkt, identisch sein. Vorteilhaft ist dann das Begrenzungsventil stufenlos einstellbar.

Schließlich ist nach der Erfindung noch vorgesehen, daß in der Arbeitsstellung des Arbeitswerkzeuges ein Ende des Zylinders mit dem Sammelbehälter und das andere Ende des Zylinders mit der Pumpe und mit dem Sammelbehälter über das Begrenzungsventil verbunden ist. Damit kann das Arbeitswerkzeug in der Arbeitsstellung gegenüber dem Fahrzeug beim Auftreffen auf Bodenunebenheiten leicht vertikale Relativbewegungen ausführen, ohne daß eine Langlochverbindung erforderlich wäre, wobei der Bodendruck in der Regel konstant gehalten wird.

Bei einem Fahrzeug, bei dem vor dem oder den vorderen Laufrädern des Fahrzeuges drei Spindelmäheinheiten über je einen Tragarm in einer Querreihe angeordnet sind, kann außerdem vorgesehen werden, daß die beiden außen liegenden Tragarme über an ihnen vorgesehene Hebelteile an einem einzigen Zylinder, und zwar am Ende seiner Kolbenstange und an dem der Kolbenstange abgelegenen Ende des Zylinders vertikal schwenkbar angeschlossen sind. Damit wird gegenüber dem gattungsbildenden Stand der Technik ein Zylinder eingespart und die Arbeitsbreite wird noch dadurch vergrößert, daß rückwärtig der vorderen Tragarme zwei weitere Tragarme am Fahrzeug vertikal schwenkbar gelagert sind, die mit Hebelteilen fest verbunden sind, an die ein einziger rückwärtiger Zylinder angekuppelt ist.

Damit in allen Stellungen der Spindelmäheinheiten in der zweiten Richtung ein entsprechender Druck ausübbar ist, sieht die Erfindung ferner noch vor, daß die kolbenseitigen Enden der Zylinder an eine einen Verbraucher mit Druckmedium versorgende Pumpe und die kolbenstangenseitigen Enden der Zylinder an eine weitere Pumpe angeschlossen sind. Als Verbraucher können dabei ein oder mehrere oder alle Antriebsmotore der vorzugsweise hydraulisch antreibbaren Spindelmäheinheiten dienen.

In der Zeichnung ist ein nachfolgend näher erläutertes Ausführungsbeispiel der Erfindung dargestellt. Es zeigt:
- Fig. 1: ein nur teilweise dargestelltes Fahrzeug in perspektivischer Ansicht für den Rasenschnitt,

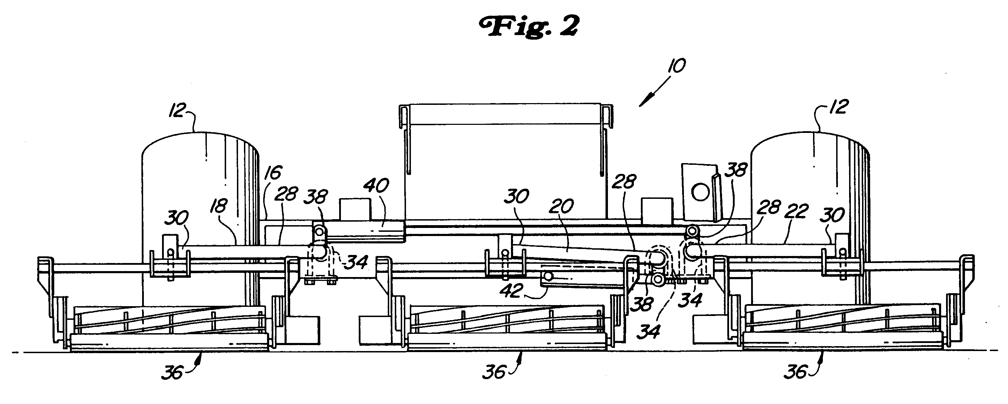

- Fig. 2: das Fahrzeug nach Fig. 1 in seiner Ansicht von vorne,
- Fig. 3: einen vorderen Abschnitt des Fahrzeuges nach Fig. 1 in der Seitenansicht und
- Fig. 4: einen hydraulischen Kreislauf in schematischer Darstellung für das Fahrzeug nach Fig. 1.

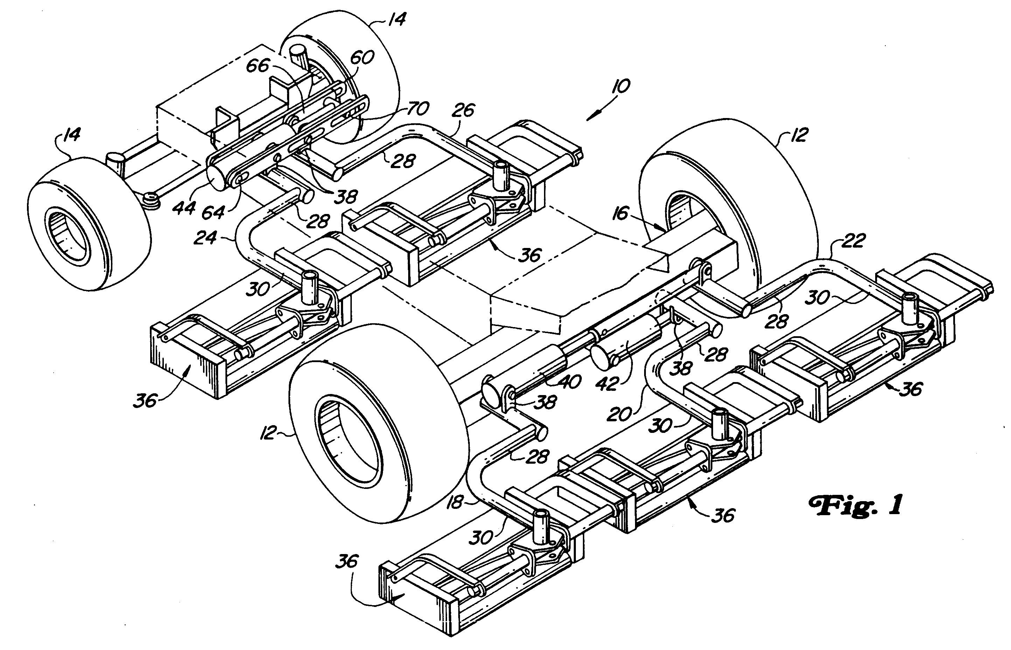

In Fig. 1 der Zeichnung ist ein Fahrzeug 10 in Form eines Spindelmähers für die Rasenpflege schematisch dargestellt, das zwei antreibbare vordere Laufräder 12 und zwei rückwärtige lenkbare Laufräder 14 aufweist. Ein starrer Tragaufbau oder ein einziger vorzugsweise T-förmig ausgebildeter Rahmen 16 erstreckt sich seitlich zwischen den beiden vorderen Laufrädern 12 und in Längsrichtung des Fahrzeuges nach hinten zwischen den vorderen und rückwärtigen Laufrädern 12 und 14. Eine Vielzahl von sich in der Arbeitsstellung horizontal erstreckenden Armen 18, 20, 22, 24 und 26 weist beim Ausführungsbeispiel eine Z-Form auf und ist mit inneren und äußeren Abschnitten 28 und 30 ausgerüstet. Die inneren Abschnitte 28 sind mit dem Rahmen 16 vertikal schwenkbar verbunden, wozu sie in Hülsen oder Buchsen 32 drehbar aufgenommen sind, die mit dem Rahmen 16 über U-Bügel 34 fest verbunden sind. Die äußeren Abschnitte 30 sind mit Spindelmäheinheiten 36 verbunden, die in ihrer in Fig. 1 dargestellten Arbeitsstellung über nicht dargestellte Walzen oder Rollen auf der Bodenoberfläche geführt werden und die aus ihrer Stellung in Fig. 1 um etwa 90° in eine angehobene Transportstellung hydraulisch verschwenkbar sind. In Fig. 1 sind drei vordere und vor den vorderen Laufrädern 12 angeordnete und zwei rückwärtige und zwischen den Achsen angeordnete Spindelmäheinheiten 36 erkennbar.

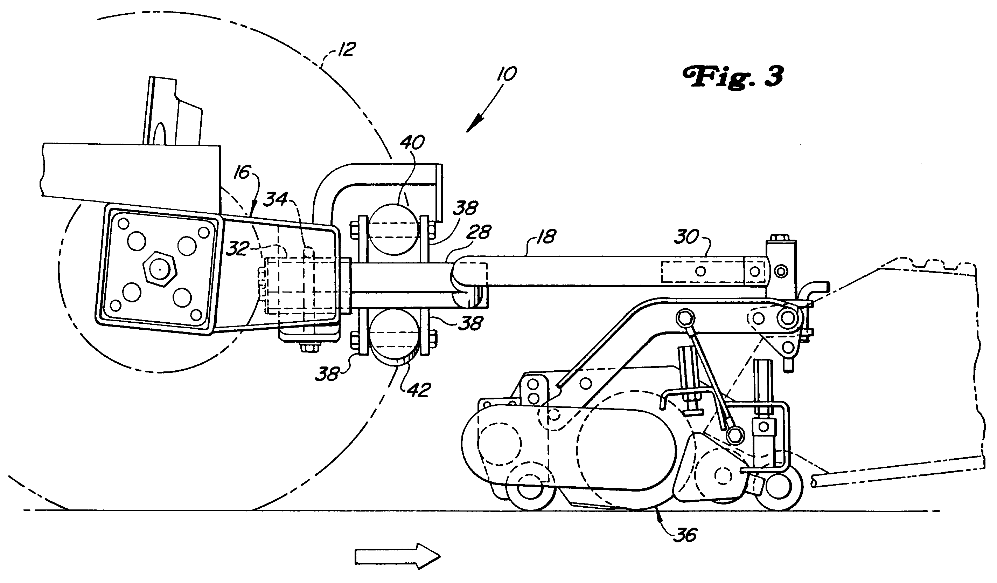

Aus den Fig. 1 und 3 ist zu entnehmen, daß die inneren Abschnitte 28 der Arme 18 bis 28 mit Hebelteilen 38 in Form von vertikal gerichteten Laschen versehen sind, an die zum vertikalen Verschwenken hydraulisch betätigbare Zylinder angeschlossen sind. Im einzelnen sind drei Zylinder 40, 42 und 44 vorgesehen, wobei der erste Zylinder 40 an die Hebelteile 38 der vorderen rechts außen und links außen liegenden Arme 18 und 22 angeschlossen ist. Seine Kolbenstange ist hierzu mit einer entsprechenden Verlängerung versehen, um den Abstand zwischen den beiden Hebelteilen 38 überbrücken zu können. Der linke und nach oben gerichtete Hebelteil 38 ist an der Verlängerung angelenkt, während der rechte ebenfalls nach oben gerichtete Hebelteil an das Gehäuse des Zylinders gelenkig angeschlossen ist. Der zweite Zylinder 42 ist mit seinem Zylindergehäuse an den Rahmen 16 angelenkt und greift mit seiner Kolbenstange an den nach unten gerichteten Hebelteil 38 des mittigen vorderen Armes 20 gelenkig an. Der dritte Zylinder 44 ist an die beiden rückwärtigen Arme 24, 26 bzw. deren Hebelteile 38 angeschlossen, wie nachfolgend noch näher erläutert wird. Werden die Kolbenstangen der Zylinder 40 bis 44 eingefahren, so werden die Arme 18 bis 26 und die daran angeschlossenen Spindelmäheinheiten 36 nach oben in ihre Transportstellung gedreht. Beim Ausfahren der Kolbenstangen kehren die Spindelmäheinheiten 36 in ihre Arbeitsstellung zurück. In der Arbeitsstellung werden die einzelnen Spindelmäheinheiten 36 über einen hydraulischen Druck, wie nachfolgend ebenfalls noch zu erläutern ist, gegen die Bodenoberfläche gedrückt. Bei Arbeiten auf unebenem Boden bleiben damit die einzelnen Spindelmäheinheiten mit der Bodenoberfläche immer in Kontakt, auch dann, wenn mit größeren Arbeitsgeschwindigkeiten gearbeitet wird.

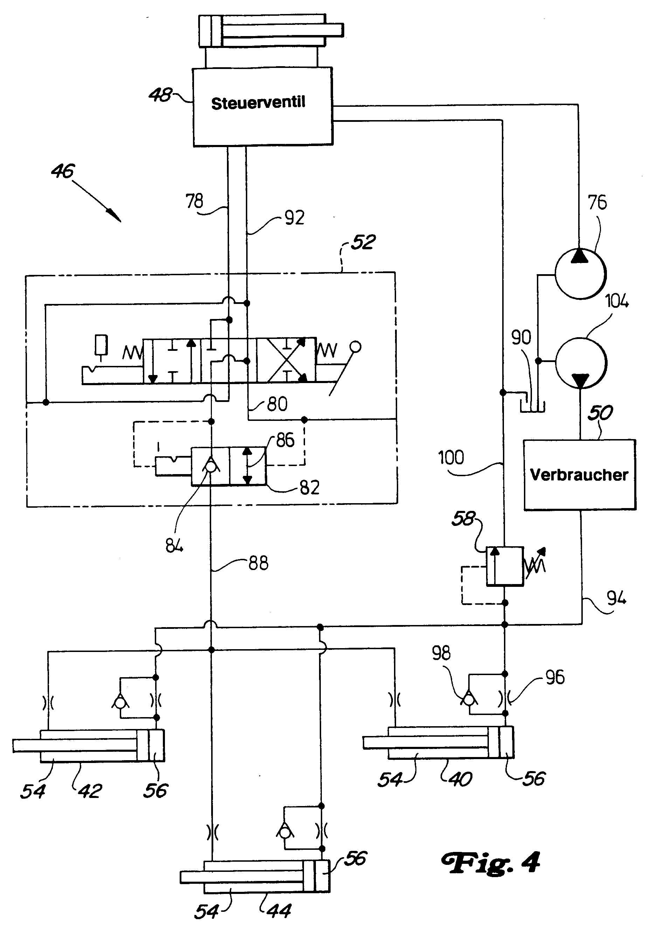

Aus Fig. 1 ist ebenfalls ersichtlich, wie der dritte Zylinder 44 mit den rückwärtigen Armen 24 und 26 bzw. mit den zugehörigen Hebelteilen 38 verbunden ist. Fig. 4 zeigt einen hydraulischen Kreislauf 46 zum Betätigen der einzelnen jeweils ein kolbenstangenseitiges und ein kolbenseitiges Ende 54, 56 aufweisenden Zylinder 40 bis 44, einen ersten Verbraucher, wie einem Lenkzylinder, der über ein im einzelnen nicht dargestelltes Lenkventil 48 betätigbar ist, einen zweiten Verbraucher 50, wie einer oder mehrere der hydraulischen Antriebsmotore der Spindelmäheinheiten 36, ein Steuerventil 52 und ein Begrenzungsventil 58, worauf später noch näher eingegangen wird.

Beim Beaufschlagen der kolbenseitigen Enden der beiden vorne liegenden Zylinder 40 und 42 werden die zugehörigen Spindelmäheinheiten sofort in einen anhebenden Sinne bewegt. Für die hinten liegenden Spindelmäheinheiten trifft dies nicht zu, da sie erst mit einer kurzen zeitlichen Verzögerung ausgehoben werden. Hierzu ist zunächst beiderseits des rückwärtigen Zylinders 44 ein Paar Schienenteile mit dem nach oben weisenden Hebelteil 38 des rückwärtigen rechten Armes 24 schwenkbar verbunden. In in den Schienenteilen vorgesehenen Langlöchern ist je ein Stift 64 aufgenommen, die an dem der Kolbenstange abgelegenen Ende des Zylinders 44 vorgesehen sind. An den Hebelteil 38 des linken rückwärtigen Armes 26 ist ein weiteres Paar Schienen 66 angeschlossen, die ebenfalls mit Langlöchern versehen sind. In diesen wird ein Stift 70 aufgenommen, der an dem Ende der Kolbenstange des rückwärtigen Zylinders 44 angebracht ist. Aus der Zeichnung ist ebenfalls noch erkennbar, daß die Schienenteile 60 noch mit zwei weiteren Langlöchern versehen sind. Wenn nun der dritte Zylinder 44 im ausfahrenden Sinne druckbeaufschlagt wird, bewegen sich die Stifte 64 und 70 von einander fort, und die Schienenteile 60 und die Schienen 66 bewirken, daß, wenn sich die Spindelmäheinheiten in ihrer Arbeitsstellung befinden, sie auf die Bodenoberfläche gepreßt werden. Wird der dritte Zylinder 44 dagegen eingefahren, so bewegen sich die Stifte 64, 70 aufeinander zu, und die Schienenteile 60 und Schienen 66 verschwenken die Hebelteile 38 gegeneinander, wobei die rückwärtigen Arme 24 und 26 mit den an ihnen angreifenden Spindeleinheiten 36 in ihre angehobene Transportstellung verschwenkt werden. Infolge der in den Schienenteilen 60 und Schienen 66 vorgesehenen Langlöcher ist der dritte Zylinder über eine Totgangverbindung angeschlossen, und die Bewegung der ein- oder ausfahrenden Kolbenstange wird zeitverzögert auf die Schienenteile und Schienen übertragen, so daß die rückwärtigen Spindelmäheinheiten 36 etwas später als die vorderen Spindelmäheinheiten ausheben. Betätigt die Bedienungsperson das Steuerventil 52 zum Anheben der Spindelmäheinheiten, so werden die vorderen Mäheinheiten sofort angehoben und die rückwärtigen erst dann, wenn die Stifte 64 und 70 gegen die Enden ihrer Langlöcher gefahren sind. Erreichen zum Beispiel die vorderen Spindelmäheinheiten die Abgrenzung einer Golfbahn oder einen nicht mehr zu mähenden Bereich, so schaltet die Bedienungsperson das Steuerventil 52 auf Heben, wobei die vorderen Spindelmäheinheiten sofort mit dem Aushebevorgang beginnen und die rückwärtigen Spindelmäheinheiten bei Weiterfahrt des Fahrzeuges 10 in ihrer Arbeitsstellung noch weiter mähen können. Auf diese Wiese verbleibt in der Schnittbahn kein oder nur ein geringer Rest ungemähten Grases. Die in den Schienenteilen 60 und Schienen 66 vorgesehenen Langlöcher tragen auch dazu bei, daß der rückwärtige Zylinder während seiner Betätigung in einer horizontalen Lage gehalten wird.

In Fig. 4 befinden sich die Zylinder 40 bis 44 in ihrer eingefahrenen Stellung, in der die Spindelmäheinheiten 36 in ihren hochgeklappten Transportstellungen festgestellt sind. Um nun die Spindelmäheinheiten absenken zu können, wird das Steuerventil 52 aus seiner in Fig. 4 eingezeichneten Stellung nach links verstellt, so daß von einer Pumpe 76 geförderte Druckflüssigkeit über eine Druckleitung 78 in einen im Steuerventil vorgesehenen Kanal 80 und damit zu der rechten Seite eines Ventilschiebers 82, der ein Rückschlagventil 84 und einen weiteren freien Durchgang 86 aufweist, gelangen kann. Der Ventilschieber 82 wird dadurch in seine Stellung für freien Durchfluß verstellt, so daß eine zu den kolbenstangenseitigen Enden 54 der Zylinder 40 bis 46 führende und eine Drossel aufweisende Speiseleitung 88 mit einem Sammelbehälter 90 über eine Rücklaufleitung 92 in Verbindung steht. Flüssigkeit in den kolbenstangenseitigen Enden 54 der Zylinder 40 bis 44 kann damit in den Sammelbehälter 90 durch Ausfahren der Kolbenstangen abströmen. Das Ausfahren erfolgt unter dem Gewicht der Spindelmäheinheiten 36 und kann durch einen sich am kolbenseitigen Ende 56 der Zylinder 40 bis 44 aufbauenden Druck unterstützt werden, wenn zu diesem Zeitpunkt die zu dem zweiten Verbraucher 50 gehörenden Motore der Spindelmäheinheiten angetrieben werden. Die kolbenseitigen Enden 56 der Zylinder 40 bis 44 sind hierzu über eine Leitung 94, in der sich eine Drossel 96 und ein Rückschlagventil 98 befindet, mit dem Ausgang des zweiten Verbrauchers 50 verbunden. Die Leitung 94 ist noch über eine Abzweigleitung, in der sich das Begrenzungsventil 58 befindet, an den Sammelbehälter 90 oder an die Rücklaufleitung 92 angeschlossen. Die Durchgangsöffnung im Begrenzungsventil 58, das entgegen der Wirkung einer Feder pilotgesteuert ist, kann von Hand eingestellt werden, wodurch der am kolbenseitigen Ende auf die Kolben der Zylinder 40 bis 44 einwirkende Druck veränderbar ist.

Für die Arbeitsstellung verbleibt das Steuerventil 52 in seiner vorstehend beschriebenen Stellung, in der also das Steuerventil 52 aus seiner in Fig. 4 eingezeichneten Stellung nach links verschoben wurde. Die kolbenstangenseitigen Enden 54 der Zylinder 40 bis 44 sind damit mit dem Sammelbehälter 90 verbunden, und der Bodendruck der Spindelmäheinheiten 36 wird durch den Druck am kolbenseitigen Ende 56 der Zylinder bestimmt. In der Arbeitsstellung sind auch die Motore der Spindelmäheinheiten 36 angetrieben und von den zweiten Verbraucher abströmende Flüssigkeit gelangt zu den kolbenseitigen Enden 56. Je nachdem, wie das Begrenzungsventil 58 eingestellt ist, baut sich hier eine mehr oder weniger große Kraft auf, die den Bodendruck aller Spindelmäheinheiten bestimmt. Überschüssige Flüssigkeit kann durch das Begrenzungsventil 58 in den Sammelbehälter 90 abströmen. Bei Auftreffen einer oder mehrerer oder aller Spindelmäheinheiten auf Bodenunebenheiten wird auch der eingestellte Bodendruck nicht verringert. So wird zum Beispiel beim Auftreffen auf eine Bodenvertiefung die entsprechende Kolbenstange ausgefahren, da sich die entsprechende Spindelmäheinheit absenkt und sich am kolbenstangenseitigen Ende 54 befindliche Flüssigkeit in den Sammelbehälter 90 abströmen kann. Gleichzeitig wirkt der durch das Begrenzungsventil 58 eingestellte Druck am kolbenseitigen Ende 56 weiter. Bei einem Auftreffen auf Bodenerhebungen wird die Kolbenstange des oder der entsprechenden Zylinder eingefahren. Infolge der offenen Verbindung mit dem Sammelbehälter 90 wird aus diesem Flüssigkeit in das kolbenstangenseitige Ende 54 gesaugt und Flüssigkeit aus dem kolbenseitigen Ende 56 in den Sammelbehälter 90 durch das Begrenzungsventil 58 gedrückt. Auf diese Weise können die Spindelmäheinheiten 36 immer mit einem bestimmten Bodendruck über die Bodenoberfläche laufen, gleichgültig, ob sie sich dabei absenken oder anheben. Insbesondere bei höheren Arbeitsgeschwindigkeiten wirkt sich dieser einstellbare Bodendruck als sehr vorteilhaft aus.

Zum Verstellen der Spindelmäheinheiten 36 aus ihrer Arbeitsstellung in die Transportstellung wird das Steuerventil 52 aus seiner in Fig. 4 eingezeichneten Stellung nach rechts verschoben, wodurch der Ventilschieber wieder in seine Stellung nach Fig. 4 zurückgestellt und die Druckleitung 78 mit der Speiseleitung 88 verbunden wird, so daß die kolbenstangenseitigen Enden 54 der Zylinder 40 bis 44 druckbeaufschlagt und die zugehörigen Kolbenstangen eingefahren werden. Sich noch dann in den kolbenseitigen Enden 56 befindliche Flüssigkeit wird durch das Begrenzungsventil 58 in den Sammelbehälter 90 gedrückt. Da bei diesem Vorgang die Motore der Spindelmäheinheiten nicht mehr angetrieben werden, steht die Flüssigkeit an den Enden 56 auch nicht mehr unter einem entsprechenden Druck.

Sobald die Spindelmäheinheiten ihre Transportstellung erreicht haben, wird das Steuerventil 52 in seine in Fig. 4 eingezeichnete Stellung zurückgestellt. Sich in der Speiseleitung befindliche Flüssigkeit wird durch das Rückschlagventil 84 im Ventilschieber 82 blockiert und die Kolbenstangen der Zylinder 40 bis 44 können nicht mehr ausgefahren werden. Ein Absenken der Spindelmäheinheiten 36 ist damit unterbunden. Druckflüssigkeit in der Druckleitung 78 wird über das Steuerventil und einen Kanal 102 in die Rücklaufleitung 92 geführt.

Beim Ausführungsbeispiel ist der Einlaß des zweiten Verbrauchers 50 noch an eine zweite Pumpe 104 angeschlossen, die ebenso wie die Pumpe 76 immer Druckflüssigkeit fördert, solange ein Verbrennungsmotor des Fahrzeuges läuft. Der zweite Verbraucher 50 läßt sich abschalten, so daß dann von der Pumpe 104 gefördertes Druckmedium in die Leitung 94 gelangt. In einem solchen Fall baut sich in den kolbenseitigen Enden 56 der Zylinder 40 bis 44 immer ein Druck auf. Bei einem Anheben der Spindelmäheinheiten wird dann der Druck im kolbenseitigen Ende 56 überwunden.

Wird der Einlaß des zweiten Verbrauchers 50 andererseits mit dem Kanal 80 im Steuerventil 52 verbunden, so können auch die hydraulischen Antriebe für die Spindelmäheinheiten 36 von dem Steuerventil derart gesteuert werden, daß diese beim Ausheben der Spindelmäheinheiten und in deren Transportstellung automatisch abgeschaltet und beim Absenken der Spindelmäheinheiten in die Arbeitsstellung und in der Arbeitsstellung automatisch eingeschaltet sind.

Mit diesen hydraulischen Zylindern 40, 42 und 44 kann somit eine Hubkraft und eine Druckkraft für die Spindelmäheinheiten 36 erzeugt werden. Dadurch, daß beide Funktionen erzielbar sind, können zusätzliche Mittel, wie die Spindelmäheinheiten auf den Boden drückende Federn verzichtet werden. Der durch die Zylinder erzeugbare Bodendruck für die Spindelmäheinheiten ist veränderbar, da die Bedienungsperson die Durchgangsöffnung des Begrenzungsventils 58 verstellen kann. Dies kann auch während der Fahrt erfolgen, so daß ein Mähvorgang nicht unterbrochen werden muß. Da das Begrenzungsventil pilotgesteuert ist, muß es sich nicht grundsätzlich von Hand verstellen lassen. Die manuelle Veränderung der Durchgangsöffnung resultiert jedoch in einem großen Bereich von einstellbaren Bodendrücken, was bei Federn an sich nicht möglich ist. Der Maximaldruck hängt dabei von der Pumpenleistung ab und von dem Druck, den die Zylinder und andere Komponenten des Kreislaufes aushalten können.

Infolge des einstellbaren Begrenzungsventils lassen sich die Drücke stufenlos einstellen. Die Bedienungsperson kann den für den einzelnen Einsatz erforderlichen Bodendruck ganz genau einstellen. Auch beim Überfahren von Bodenunebenheiten bleibt der eingestellte Bodendruck mehr oder weniger konstant. Die einzelnen Zylinder sind derart miteinander verbunden bzw. im vorliegenden Ausführungsbeispiel parallel geschaltet, daß mit einem einzigen Begrenzungsventil 58 ausgekommen werden kann. Unabhängig davon, ob das hydraulische System mit einer Pumpe oder mit zwei Pumpen arbeitet, sollte das Begrenzungsventil 58 immer als letzte Einheit vor dem Sammelbehälter 90 angeordnet sein.

Beim Ausführungsbeispiel greifen außerdem die Zylinder quer oder in einem Winkel von 90° an den zugehörigen Armen an, weshalb die Kräfte zum Hochschwenken der Arme bzw., zum Erzeugen des gewünschten Bodendruckes relativ klein gehalten werden können. Bei einem Auftreffen auf Bodenunebenheiten verstellen sich die entsprechenden Hebelteile 38 an den Armen 18 bis 26 auch nicht wesentlich. Die Hebelarme bleiben damit günstig und relativ kleine Zylinder mit geringem Hubweg können Verwendung finden, wodurch sich die Gesamtanlage natürlich verbilligt. Hierzu trägt auch bei, daß die fünf Spindeleinheiten 36 über nur drei Zylinder betätigbar sind. Anstelle der drei Zylinder können aber vier oder fünf Zylinder vorgesehen werden. Ist jeder Spindelmäheinheit ein eigener Zylinder zugeordnet, dann wird ein Ende des Zylinders mit dem Rahmen 16 des Fahrzeuges schwenkbar verbunden, wie es beispielsweise für den Zylinder 42 erfolgt. Gleichfalls ist es nicht ausgeschlossen, daß die Bodendrücke individuell einstellbar sind. Für einen solchen Fall wäre dann jedem Zylinder ein Begrenzungsventil zuzuordnen. Beim Ausführungsbeispiel sind die Zylinder 40 bis 44 Spindelmäheinheiten 36 zum Mähen von großen Rasenflächen zugeordnet. Anstelle der Spindelmäheinheiten können auch andere Bodengeräte Verwendung finden, wenn es darauf ankommt, den Bodendruck mit einfachen Mitteln zu verändern.

## Patentansprüche

1. Fahrzeug mit mindestens einem über einen Tragarm (18, 20, 22, 24 bzw. 26) an das Fahrzeug (10) schwenkbar angeschlossenen Arbeitswerkzeug, das in einer Arbeitsstellung auf der Bodenoberfläche geführt ist, in der Arbeitsstellung mit Bezug auf das Fahrzeug (10) vertikale Relativbewegungen ausführen kann und mit einem hydraulisch beaufschlagbaren Zylinder (40, 42 bzw. 44) mittel- oder unmittelbar verbunden ist, der derart in einer ersten Richtung druckbeaufschlagbar ist, daß das Arbeitswerkzeug aus seiner Arbeitsstellung in eine Transportstellung aushebbar ist, dadurch gekennzeichnet, daß in der Arbeitsstellung des Arbeitswerkzeuges der Zylinder (40, 42 bzw. 44) in einer zweiten der ersten Richtung entgegengesetzten Richtung druckbeaufschlagbar und derart angeordnet ist, daß dieser Druck auf das Arbeitswerkzeug übertragbar ist.

2. Fahrzeug nach Anspruch 1, dadurch gekennzeichnet, daß der Zylinder (40, 42 bzw. 44) beim Verstellen des Arbeitswerkzeuges aus seiner Transportstellung in seine Arbeitsstellung in der zweiten Richtung druckbeaufschlagbar ist.

3. Fahrzeug nach Anspruch 1, wobei der Kolben des hydraulisch beaufschlagbaren Zylinders (40, 42 bzw. 44) bei Beaufschlagung in der ersten Richtung in den Zylinder eingefahren wird, dadurch gekennzeichnet, daß in der Arbeitsstellung des Arbeitswerkzeuges das kolbenseitige Ende (56) des Zylinders (40, 42 bzw 44) druckbeaufschlagbar ist.

4. Fahrzeug nach einem oder mehreren der vorherigen Ansprüche, dadurch gekennzeichnet, daß der auf den Kolben bei einer Druckbeaufschlagung in der zweiten Richtung einwirkende Druck einstellbar ist.

5. Fahrzeug nach Anspruch 4 mit einer Pumpe (76 bzw. 104) und einem Sammelbehälter (90), dadurch gekennzeichnet, daß für den Druck in der zweiten Richtung ein Ende (56) des Zylinders (40, 42 bzw. 44) an die Pumpe (76 bzw. 104) über eine Leitung (94) angeschlossen ist, von der eine mit dem Sammelbehälter (90) verbundene Abzweigleitung (100) abzweigt, in der vor dem Sammelbehälter (90) ein einstellbares Begrenzungsventil (58) vorgesehen ist.

6. Fahrzeug nach Anspruch 5, dadurch gekennzeichnet, daß das Begrenzungsventil (58) stufenlos einstellbar ist.

7. Fahrzeug nach einem oder mehreren der vorherigen Ansprüche, dadurch gekennzeichnet, daß in der Arbeitsstellung des Arbeitswerkzeuges ein Ende (54) des Zylinders (40, 42 bzw. 44) mit dem Sammelbehälter (90) und das andere Ende (56) des Zylinders (40, 42 bzw. 44) mit der Pumpe (90 bzw. 104) und mit dem Sammelbehälter (90) über das Begrenzungsventil (58) verbunden ist.

8. Fahrzeug nach einem oder mehreren der vorherigen Ansprüche, wobei vor dem oder den vorderen Laufrädern (12) des Fahrzeuges (10) drei Spindelmäheinheiten (36) über je einen Tragarm (18, 20, 22) in einer Querreihe angeordnet sind, dadurch gekennzeichnet, daß die beiden außen liegenden Tragarme (18 und 22) über an ihnen vorgesehene Hebelteile (38) an einem einzigen Zylinder (40), und zwar am Ende seiner Kolbenstange und an dem der Kolbenstange abgelegenen Ende des Zylinders (40) vertikal schwenkbar angeschlossen sind.

9. Fahrzeug nach Anspruch 8, dadurch gekennzeichnet, daß rückwärtig der vorderen Tragarme (18, 20, 22) zwei weitere Tragarme (24, 26) am Fahrzeug (10) vertikal schwenkbar gelagert sind, die mit Hebelteilen (38) fest verbunden sind, an die ein einziger rückwärtiger Zylinder (44) angekuppelt ist.

10. Fahrzeug nach Anspruch 8 und/oder 9, dadurch gekennzeichnet, daß die kolbenseitigen Enden (56) der Zylinder (40, 42, 44) an eine einen Verbraucher (50) mit Druckmedium versorgende Pumpe (104) und die kolbenstangenseitigen Enden (54) der Zylinder (40, 42, 44) an eine weitere Pumpe (76) angeschlossen sind.

## Claims

1. A vehicle with at least one working implement pivotally attached to the vehicle (10) by means of a support arm (18, 20, 22, 24 or 26) and which is guided on the surface of the ground in a working position, can execute relative movements vertically relative to the vehicle (10) in the working positioned is connected indirectly or directly to a hydraulic cylinder (40, 42 or 44) which can be so pressurized in a first direction that the working implement can be raised from its working position into a transport position, characterized in that in the working position of the working implement the cylinder (40, 42 or 44) can be pressurized in a second direction opposite the first direction and is so arranged that this pressure can be transmitted to the working implement.

2. A vehicle according to claim 1, characterized in that the cylinder (40, 42 or 44) can be pressurized in the second direction when shifting the working implement from its transport position into its working position.

3. A vehicle according to claim 1, wherein the piston of the cylinder (40, 42 or 44) is retracted into the cylinder when pressurised in the first direction, characterized in that the piston end (56) of the cylinder (40, 42 or 44) can be pressurized in the working position of the working implement.

4. A vehicle according to one or more of the preceding claims, characterized in that the pressure acting on the piston when pressurising is effected in the second direction can be adjusted.

5. A vehicle according to claim 4, with a pump (76 or 104) and a reservoir (90), characterized in that one end (56) of the cylinder (40, 42 or 44) is connected to the pump (76 or 104) for pressurising in the second direction through a line (94), off which a branch line (100) branches to the reservoir (90), with an adjustable restricting valve (58) provided therein ahead of the reservoir (90).

6. A vehicle according to claim 5, characterized in that the restricting valve (58) can be adjusted steplessly.

7. A vehicle according to one or more of the preceding claims, characterized in that one end (54) of the cylinder (40, 42 or 44) is connected in the working position of the working implement to the reservoir (90) and the other end (56) of the cylinder (40, 42 or 44) is connected to the pump (90 or 104) and to the reservoir (90) through the restricting valve (58).

8. A vehicle according to one or more of the preceding claims, wherein three cylinder mower units (36) are arranged in a transverse row in front of the front ground wheel or wheels (12) of the vehicle (10), each on a support arm (18, 20, 22), characterized in that the two outer support arms (18 and 22) are vertically pivotally connected through a lever part (38) provided thereon to a single cylinder (40), namely at the end of its piston rod and at the end of the cylinder (40) remote from the piston rod.

9. A vehicle according to claim 8, characterized in that two further support arms (24, 26) are mounted to pivot vertically on the vehicle (10) to the rear of the front support arms (18, 20, 22) and are fixed to lever parts (38), to which a single rearward cylinder (44) is coupled.

10. A vehicle according to claim 8 and/or 9, characterized in that the piston ends (56) of the cylinders (40, 42, 44) are connected to a pump (104) supplying a load (50) with pressure medium and the piston rod ends (54) of the cylinders (40, 42, 44) are connected to a further pump (76).

## Revendications

1. Véhicule comportant au moins un outil de travail raccordé de manière à pouvoir pivoter au véhicule (10) par l'intermédiaire d'un bras de support (18,20,22,24 ou 26) et qui est guidé, dans une position de travail, sur la surface du sol, peut exécuter, dans la position de travail, des déplacements verticaux relatifs par rapport au véhicule (10) et est relié indirectement ou directement à un vérin (40, 42 ou 44) pouvant être chargé par voie hydraulique, et peut être chargé par une pression dans une première direction de telle sorte que l'outil de travail peut être soulevé depuis sa position de travail dans une position de transport, caractérisé en ce que lorsque l'outil de travail est dans la position de travail, le vérin (40, 42 ou 44) peut être chargé par une pression dans une seconde direction opposée à la première direction et est disposé de telle sorte que cette pression peut être transmise à l'outil de travail.

2. Véhicule selon la revendication 1, caractérisé en ce que le vérin (40,42 ou 44) peut être chargé par une pression dans une seconde direction lors du déplacement de l'outil de travail depuis sa positon de transport dans sa position de travail.

3. Véhicule selon la revendication 1, dans lequel le piston du vérin (40,42 ou 44), qui peut être chargé hydrauliquement, est rétracté dans le vérin, lors de l'application d'une charge dans la première direction, caractérisé en ce que lorsque l'outil de travail est dans la position de travail, l'extrémité (56) du vérin (40, 42 ou 44), située du côté du piston, peut être chargée par une pression.

4. Véhicule selon une ou plusieurs des revendications précédentes, caractérisé en ce que la pression, qui agit sur le piston dans le cas où une charge de pression est appliquée dans la seconde direction, est réglable.

5. Véhicule selon la revendication 4, comportant une pompe (76 ou 104) et un récipient de collecte (90), caractérisé en ce que pour une pression appliquée dans la seconde direction, une extrémité (56) du vérin (40,42 ou 44) est raccordée à la pompe (76 ou 104) par l'intermédiaire d'une canalisation (94), à partir de laquelle s'étend en dérivation une canalisation de dérivation (100) qui est reliée au réservoir de collecte (90) et dans laquelle une soupape de limitation réglable (58) est prévue en amont du récipient de collecte (90).

6. Véhicule selon la revendication 5, caractérisé en ce que la soupape de limitation (58) est réglable progressivement.

7. Véhicule selon une ou plusieurs des revendications précédentes, caractérisé en ce que lorsque l'outil de travail est dans la position de travail, une extrémité (54) du vérin (40, 42 ou 44) est reliée au récipient de collecte (90) et que l'autre extrémité (56) du vérin (40, 42 ou 44) est reliée à la pompe (90 ou 104) et au récipient de collecte (90) par l'intermédiaire d'une soupape de limitation (58).

8. Véhicule selon une ou plusieurs des revendications précédentes, dans lequel trois unités formant tondeuses (36) entraînées par rouleau sont disposées en amont des roues avant (12) du véhicule (10), par l'intermédiaire respectivement d'un bras de support (18,20,22) selon une rangée disposée transversalement, caractérisé en ce que les deux bras de support extérieurs (18 et 22) sont raccordés, de manière à pouvoir pivoter verticalement, par l'intermédiaire d'éléments de levier (38) prévus sur ces bras, à un seul vérin (14), et ce à l'extrémité de la tige de piston de ce dernier et à l'extrémité du vérin (40), située à l'opposé de la tige de piston.

9. Véhicule selon la revendication 8, caractérisé en ce qu'en arrière des bras de support avant (18,20,22), deux autres bras de support (24,26) sont disposés de manière à pouvoir pivoter verticalement sur le véhicule (10) qui sont reliés rigidement aux éléments de levier (38), auxquels est accouplé un seul vérin arrière (44).

10. Véhicule selon la revendication 8 et/ou 9, caractérisé en ce que les extrémités (56), situées du côté des tiges de piston, des vérins (40, 42, 44) sont raccordées à une pompe (104), qui alimente un appareil d'utilisation (50) avec un fluide sous pression, et que les extrémités (54), situées du côté des tiges de piston, des vérins (40,42,44) sont raccordées à une autre pompe (76).
